(19) Europäisches Patentamt
European Patent Office
Office européen des brevets

(11) Veröffentlichungsnummer: **0 314 621**
**A2**

# (12) EUROPÄISCHE PATENTANMELDUNG

(21) Anmeldenummer: **88810715.8**

(22) Anmeldetag: **19.10.88**

(51) Int. Cl.4: **C 09 B 67/22**
C 09 B 57/04, C 08 K 5/34

(30) Priorität: **28.10.87 CH 4220/87**

(43) Veröffentlichungstag der Anmeldung:
**03.05.89 Patentblatt 89/18**

(84) Benannte Vertragsstaaten:
**CH DE FR GB IT LI**

(71) Anmelder: **CIBA-GEIGY AG**
**Klybeckstrasse 141**
**CH-4002 Basel (CH)**

(72) Erfinder: **Bäbler, Fridolin, Dr.**
**Route du Couchant 12**
**CH-1723 Marly (CH)**

## (54) Feste Lösungen von Azomethinpigmenten.

(57) Feste Lösungen aus mindestens zwei unterschiedlichen Verbindungen der Formel I

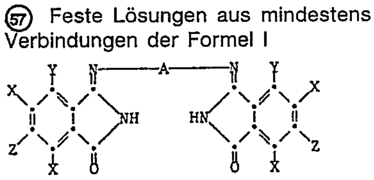

(I),

worin A eine der Gruppen

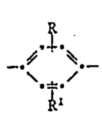

,

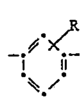

,

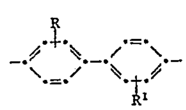

,

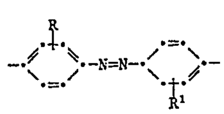

oder

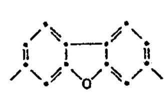

ist, worin R und $R^1$ unabhängig voneinander Wasserstoff, Halogen, $C_1$-$C_4$-Alkyl oder $C_1$-$C_4$-Alkoxy bedeuten, X Halogen, Y und Z unabhängig voneinander Halogen, $C_1$-$C_4$-Alkoxy, $C_1$-$C_4$-Alkylmercapto, $C_5$-$C_6$-Cycloalkoxy, unsubstituiertes oder durch Halogen oder $C_1$-$C_4$-Alkyl substituiertes Phenoxy bedeuten, dadurch gekennzeichnet, dass sich die die festen Lösungen bildenden Verbindungen der Formel I durch mindestens einen der Substituenten X, Y oder Z und/oder durch die Gruppe A unterscheiden und dass sich die Röntgenbeugungsdiagramme der festen Lösungen von der Summe der Röntgenbeugungsdiagramme der Einzelkomponenten unterscheiden.

Solche feste Lösungen eignen sich hervorragend als Pigmente zum Färben von hochmolekularem organischem Material.

EP 0 314 621 A2

**Beschreibung**

## Feste Lösungen von Azomethinpigmenten

Die vorliegende Erfindung betrifft feste Lösungen von im Benzolkern substituierten Isoindolinonverbindungen und ihre Verwendung zum Färben von hochmolekularem organischem Material.

Aus der US-PS 4 008 097 sind Isoindolinonpigmentmischungen, die durch Mischsynthese aus im Benzolkern unsubstituierten Isoindolinonen und substituierten p-Phenylendiaminen erhalten werden, bekannt. Obwohl diese Mischungen im allgemeinen gute Pigmenteigenschaften besitzen, vermögen sie nicht immer den heutigen hohen Anforderungen der Technik zu genügen.

Es ist nun gefunden worden, dass man überraschenderweise aus zwei unterschiedlichen, im Benzolkern substituierten Isoindolinonverbindungen feste Lösungen erhalten kann, die sich durch hervorragende Pigmenteigenschaften auszeichnen.

Die vorliegende Erfindung betrifft demnach feste Lösungen aus mindestens zwei unterschiedlichen Verbindungen der Formel I

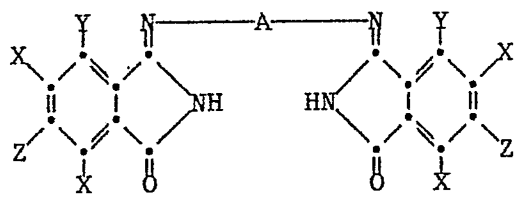

(I),

worin A eine der Gruppen

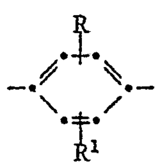

,

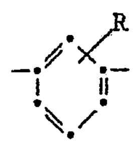

,

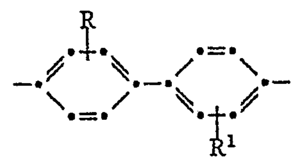

,

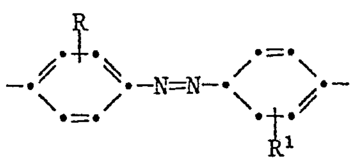

oder

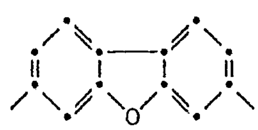

ist, worin R und $R^1$ unabhängig voneinander Wasserstoff, Halogen, $C_1$-$C_4$-Alkyl oder $C_1$-$C_4$-Alkoxy bedeuten, X Halogen, Y und Z unabhängig voneinander Halogen, $C_1$-$C_4$-Alkoxy, $C_1$-$C_4$-Alkylmercapto, $C_5$-$C_6$-Cycloalkoxy, unsubstituiertes oder durch Halogen oder $C_1$-$C_4$-Alkyl substituiertes Phenoxy bedeuten, dadurch gekennzeichnet, dass sich die die festen Lösungen bildenden Verbindungen der Formel I durch mindestens einen der Substituenten X, Y oder Z und/oder durch die Gruppe A unterscheiden und dass sich die Röntgenbeugungsdiagramme der festen Lösungen von der Summe der Röntgenbeugungsdiagramme der Einzelkomponenten unterscheiden.

Bedeuten etwaige Substituenten Halogen, so handelt es sich beispielsweise um Fluor, Brom, Jod oder insbesondere um Chlor.

Bedeuten etwaige Substituenten $C_1$-$C_4$-Alkyl so handelt es sich z.B. um Methyl, Ethyl, n-Propyl, Isopropyl, n-Butyl, sec.-Butyl, tert.-Butyl.

Bedeuten etwaige Substituenten $C_1$-$C_4$-Alkoxy, dann kann es sich z.B. um Methoxy, Ethoxy, n-Propoxy, Isopropoxy, n-Butoxy, sec.-Butoxy oder tert.-Butoxy handeln.

Y und Z bedeuten als $C_1$-$C_4$-Alkylmercapto z.B. Methylmercapto, Ethylmercapto, n-Propylmercapto, Isopropylmercapto, n-Butylmercapto, sec.-Butylmercapto, tert.-Butylmercapto.

Als $C_5$-$C_6$-Cycloalkoxy bedeuten Y und Z z.B. Cyclopentyloxy oder bevorzugt Cyclohexyloxy.

A ist bevorzugt eine der Gruppen

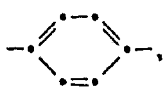, 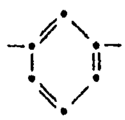, 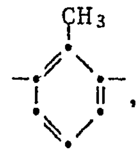, 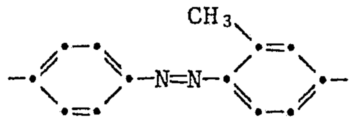 oder

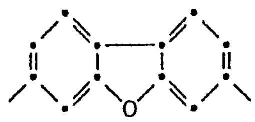.

Besonders bevorzugt ist A eine der Gruppen

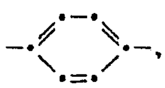, 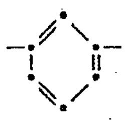, 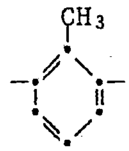 oder 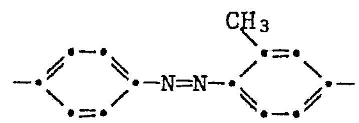

und insbesondere

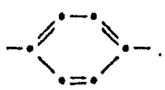. und 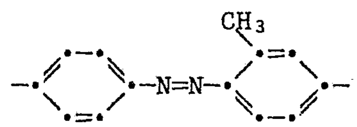

X ist bevorzugt Chlor und Y und Z sind bevorzugt $C_1$-$C_4$-Alkoxy und insbesondere Chlor.

In den erfindungsgemässen festen Lösungen beträgt das Verhältnis zwischen den zwei im wesentlichen die feste Lösung bildenden Verbindungen der Formel I zweckmässig 5-95:95-5, bevorzugt 10-90:90-10 Gew.-%.

Die erfindungsgemässen festen Lösungen können ausgehend von physikalischen Mischungen der Einzelkomponenten (zwei unterschiedliche Verbindungen der Formel I) nach folgenden an und für sich bekannten Verfahren hergestellt werden:

- durch Kontaktierung in polaren organischen Lösungsmitteln, bevorzugt durch Verrühren der Komponentenmischung bei Rückflusstemperatur;
- durch alkalische Umfällung der Komponentenmischung in polaren organischen Lösungsmitteln oder durch Verrühren oder Mahlen derselben in polaren organischen Lösungsmitteln in Gegenwart von Basen, wie Alkoholate, Alkalihydroxide oder quaternäre Ammoniumverbindungen;
- durch intensive Mahlung oder Knetung der Komponentenmischung, gegebenenfalls mit anschliessender Rekristallisation in Wasser und/oder organischen Lösungsmitteln.

Als polare organische Lösungsmittel in deren Gegenwart die Einzelkomponenten zur Bildung der erfindungsgemässen festen Lösungen kontaktiert werden, können beispielsweise Dimethylformamid, N-Methylformamid, Tetramethylharnstoff, Dimethylacetamid, N-Methylpyrrolidon, Dimethylsulfoxid, Tetramethylsulfon, Eisessig, Ketone, wie Cyclohexanon, Alkohole, wie n-Butanol, Cyclohexanol oder Benzylalkohol, ferner Ethylenglykol, Propylenglykol, Ether, wie Ethylenglykoldimethylether, Diphenylether oder Anisol, sowie aromatische Kohlenwasserstoffe, wie Nitrobenzol, Chlorbenzol, Dichlor- und Trichlorbenzole, Toluole und Xylole, oder Ester, wie Ethylacetat oder Butylacetat, erwähnt werden.

Bei der alkalischen Umfällung wird die physikalische Mischung der Einzelkomponenten in einem polaren organischen Lösungsmittel, bevorzugt einem Alkohol der Formel $C_rH_{2r+1}OH$, worin r eine ganze Zahl von 1 bis 5 bedeutet, durch Zugabe einer mindestens äquivalenten Menge einer Base, wie z.B. einem Na-Alkoholat, z.B. Na-Methylat, -Ethylat, -Isopropylat oder -tert. Amylat, Ammoniak, Methyl- oder Dimethylamin, Natronlauge oder Kalilauge, gelöst, worauf die feste Lösung durch Verdünnen mit Wasser oder durch Zugabe einer Mineral-oder organischen Säure, wie Salzsäure, Schwefelsäure oder Essigsäure, gefällt wird.

Bevorzugt werden die erfindungsgemässen festen Lösungen ausgehend von den physikalischen Komponentenmischungen durch Mahlung oder Knetung, beispielsweise Salzknetung in Gegenwart eines organischen Lösungsmittels, wie Diacetonalkohol, hergestellt.

Besonders bevorzugtes Mahlverfahren ist die Mahlung in einem organischen Lösungsmittel und/oder Wasser. Dabei können als Mahlkörper Metall- oder insbesondere Glas- oder Keramikkugeln, Kunststoffgranulat oder Sandkörner, wie für Pigmente allgemein üblich, verwendet werden. Trockenmahlung und Trockensalzmahlung eignen sich auch als Mahlverfahren.

Die Mahlungen und Knetungen werden zweckmässig bei Temperaturen zwischen 5 und 90°C, vorzugsweise zwischen 15 und 60°C, durchgeführt.

Bei der Trockensalzmahlung werden bevorzugt NaCl, $CaCl_2$, $Na_2SO_4$ oder $Al_2(SO_4)_3$ mit oder ohne Kristallwasser verwendet. Auf 100 bis 150 Gewichtsteile Salz werden beispielsweise 10 bis 50 Gewichtsteile des Komponentengemisches verwendet. Dabei kann es von Vorteil sein, dem Mahlmedium geringe Mengen an Lösungsmitteln, wie Xylol oder Tetrachlorethylen und/oder Tensiden, wie z.B Dodecylbenzolsulfonsäurenatriumsalz oder -isopropylammoniumsalz, zuzufügen. Die Aufarbeitung erfolgt nach an sich bekannten Methoden, indem das feste Lösung/Salzgemisch von den Mahlkörpern getrennt, dann in Wasser gegeben wird, und die erhaltene Suspension danach abfiltriert wird.

Wässrige Mahlungen der physikalischen Komponentenmischungen können mit oder ohne Mahlhilfsmittel, wie sie beispielsweise in EP-A-101 666, sowie in EP-A-221 853 beschrieben sind, durchgeführt werden. Dabei kann es von Vorteil sein, den pH-Wert vom neutralen in den leicht sauren oder alkalischen Bereich zu verschieben.

Obwohl die erfindungsgemässen festen Lösungen ausgezeichnete Pigmenteigenschaften aufweisen, kann es vorteilhaft sein, Texturschutzmittel zuzufügen.

Geeignete Texturschutzmittel sind beispielsweise Fettsäuren mit mindestens 12 C-Atomen, wie Stearinsäure oder Behensäure, deren Amide, Ester oder Salze, wie Magnesium-, Zink- oder Aluminiumstearat oder Magnesiumbehenat, ferner quaternäre Ammoniumverbindungen, wie Tri-($C_1$-$C_4$)-alkylbenzylammoniumsalze, ferner Weichmacher, wie epoxidiertes Sojabohnenöl, Wachse, wie Polyethylenwachs, Harzsäuren, wie Abietinsäure, Kolophonium seife, hydriertes oder dimerisiertes Kolophonium, $C_{12}$-$C_{18}$-Paraffindisulfonsäuren, Alkylphenole oder Alkohole, wie Stearylalkohol, ferner Lauryl-oder Stearylamin, sowie aliphatische 1,2-Diole, wie Dodecandiol-1,2.

Bevorzugte Texturschutzmittel sind Lauryl- oder Stearylamin, aliphatische 1,2-Diole, Stearinsäure, deren Amide, Salze oder Ester, epoxidiertes Sojabohnenöl, Wachse oder Harzsäuren.

Solche Zusatzstoffe können in Mengen von 0,05 bis 20, bevorzugt 1 bis 10 Gew.%, bezogen auf die feste Pigmentlösung, vor, während oder nach deren Bildung zugegeben werden.

Feste Lösungen können durch ihr Röntgenbeugungsspektrum gekennzeichnet werden, welches sich von demjenigen des physikalischen Gemisches der beiden Einzelkomponenten unterscheidet. Das Röntgenbeugungsdiagramm der erfindungsgemässen festen Lösungen ist durch andere Linien als die Summe der Röntgenbeugungsdiagramme der Einzelkomponenten gekennzeichnet.

Die erfindungsgemässen festen Lösungen weisen interessante grün- bis rotstichig gelbe Nuancen auf und ergeben Ausfärbungen von ausgezeichneter Licht-, Wetter-, Hitze- und Migrationsbeständigkeit. Gegenüber entsprechenden physikalischen Mischungen weisen sie zudem oft überraschende Nuancenverschiebungen auf.

Die erfindungsgemässen festen Lösungen eignen sich ausgezeichnet als Pigmente zum Färben von hochmolekularem organischem Material. Sie weisen gegenüber den Ausgangspigmenten unterschiedliche koloristische Eigenschaften auf und können je nach dem Herstellungsverfahren in transparenter oder deckender Form vorliegen. Durch thermische Nachbehandlung in organischen Lösungsmitteln lassen sie sich beispielsweise gut rekristallisieren, d.h. man erhält eine deckende Form mit einer einheitlichen Pigmentpartikelgrösse und -form. Vorzugsweise verwendet man als organische Lösungsmittel z.B. durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Alkohole, wie Isopropanol, Butanole, Pentanole, oder Tricyclodecanalkohole, Ether, wie Ethylenglykomonomethyl-oder -monoethylether, Amide, wie Dimethylformamid oder N-Methylpyrrolidon, sowie Dimethylsulfoxid oder Sulfolan.

Hochmolekulare organische Materialien, die mit den erfindungsgemässen festen Lösungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisations- oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen festen Lösungen zum Einfärben von Polyvinylchlorid und Polyolefinen, wie Polyethylen und Polypropylen, sowie zum Pigmentieren von Lacken und Anstrichstoffen, insbesondere Automobildecklacken.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen festen Lösungen als Toner oder in Form von Präparaten einzusetzen.

Bezogen auf das zu pigmentierende hochmolekulare organische Material kann man die erfindungsgemässen festen Lösungen in einer Menge von 0,01 bis 30 Gew.%, vorzugsweise von 0,1 bis 10 Gew. %, einsetzen.

Die Pigmentierung der hochmolekularen organischen Substanzen mit den erfindungsgemässen festen Lösungen erfolgt beispielsweise derart, dass man eine solche feste Lösung, gegebenenfalls in Form von Masterbatches, diesen Substraten unter Verwendung von Walzwerken, Misch- oder Mahlapparaten zumischt.

Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht.

Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen festen Lösungen in die Polymeren eingearbeitet werden. Zwecks Erzielung verschiedener Farbtöne ist es ferner möglich, den hochmolekularen organischen Stoffen neben den erfindungsgemässen festen Lösungen noch Füllstoffe bzw. andere farbgebende Bestandteile, wie Weiss-, Bunt-oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen festen Lösungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahen, dass man die einzelnen Komponenten für sich oder auch mehrere gemeinsam dispergiert bzw. löst, und erst hierauf alle Komponenten zusammenbringt.

In Färbungen, beispielsweise von Polyvinylchlorid oder Polyolefinen, zeichnen sich die erfindungsgemässen festen Lösungen durch gute allgemeine Pigmenteigenschaften, wie gute Dispergierbarkeit, hohe Farbstärke und Reinheit, gute Migrations-, Hitze-, Licht- und Wetterbeständigkeit aus.

Die nachfolgenden Beispiele erläutern die Erfindung.

Beispiel 1:

In eine Kugelmühle mit einem Inhalt von ca. einem Liter, enthaltend als Mahlhilfsmittel 1,5 kg Stahlkugeln (Ø 1,2 cm) und 150 g Nägel (Länge 3 cm), werden 4,4 g des Pigmentes der Formel II

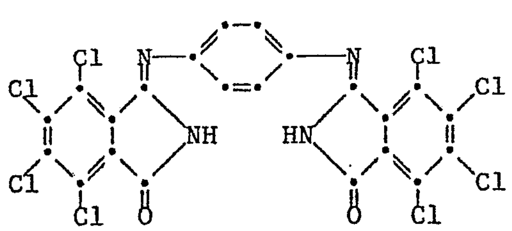

(II),

0,8 g des Pigmentes der Formel III

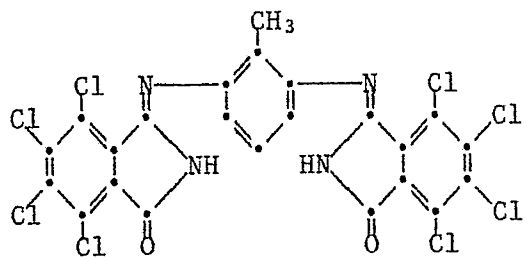

(III),

20 g Aluminiumsulfat [$Al_2(SO_4)_3 \cdot 15\text{-}18H_2O$], 0,25 g Benzoldodecylsulfonsäure-Na-Salz und 0,8 ml Tetrachlorethylen gegeben. Die gut verschlossene Mühle wird während 6 Stunden auf einer Rollbank bei Raumtemperatur gerollt. Nach wird das Mahlmedium von den Mahlkörpern abgetrennt und in 500 ml Wasser während 1 Stunde bei 60-70°C gerührt. Das Pigment wird abfiltriert, der Presskuchen wird mit heissem Wasser neutral und salzfrei gewaschen, im Vakuumtrockenschrank bei 80°C getrocknet, und die erhaltene Ware wird gepulvert. Man erhält 5,0 g einer sehr feinkristallinen gelben festen Pigmentlösung, deren Röntgenbeugungsdiagramm sich vom Röntgenbeugungsdiagramm der physikalischen Mischung der entsprechenden Ausgangsprodukte unterscheidet.

Beim Einarbeiten in Kunststoffe und Lacke erhält man farbstarke gelbe Ausfärbungen mit ausgezeichneten Beständigkeiten.

3,5 g der gemäss obigem Verfahren erhaltenen feinkristallinen festen Pigmentlösung werden in 80 ml n-Butanol während 16 Stunden bei Rückflusstemperatur verrührt. Die gelbe Pigmentsuspension wird abgekühlt, abfiltriert und mit n-Butanol gewaschen. Das Pressgut wird bei 80°C im Vakuumtrockenschrank getrocknet und die erhaltene Ware wird gepulvert. Man erhält eine gegenüber dem Ausgangsprodukt grobkristallinere feste Pigmentlösung, deren Röntgenbeugungsdiagramm sich vom Röntgenbeugungsdiagramm der physikalischen Mischung der entsprechenden Ausgangskomponenten nach wie vor unterscheidet. Dies bedeutet, dass während der Lösungsmittelbehandlung wohl eine Vergröberung der Kristalle, aber keine Auftrennung in die einzelnen Ausgangskomponenten stattfindet. Die elektronenmikroskopische Aufnahme der erhaltenen Kristalle zeigt Partikel mit gleichmässiger prismenförmiger Struktur.

Beispiel 2:

Verfährt man analog wie in Beispiel 1 beschrieben, verwendet aber anstelle des Pigments der Formel III das Pigment der Formel IV

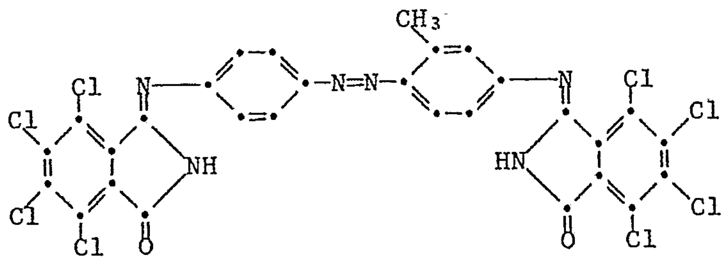

(IV),

so erhält man eine rotstichig gelbe feste Pigmentlösung, deren Röntgenbeugungsdiagramm sich vom Röntgenbeugungsdiagramm der physikalischen Mischung der entsprechenden Ausgangsprodukte unterscheidet. Beim Einarbeiten in Kunststoffe und Lacke erhält man farbstarke rotstichig gelbe Ausfärbungen mit ausgezeichneten Beständigkeiten.

Beispiel 3:

Verfährt man analog wie in Beispiel 1 beschrieben, verwendet aber anstelle von 4,4 g nur 4,1 g des Pigments der Formel II und anstelle von 0,8 g des Pigments der Formel III 1,0 g des Pigments der Formel V

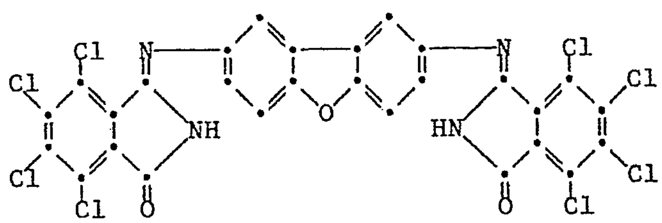

(V),

so erhält man eine gelbe feinkristalline feste Pigmentlösung, deren Röntgenbeugungsdiagramm sich vom Röntgenbeugungsdiagramm der physikalischen Mischung der entsprechenden Ausgangsprodukte unterscheidet.

Rekristallisiert man die erhaltene feinkristalline feste Lösung wie in Beispiel 1 beschrieben, so erhält man sie in einer etwas grobkristallineren Pigmentform, welche sich einwandfrei in Lacke und Kunststoffe einarbeiten lässt und farbstarke gelbe Ausfärbungen mit ausgezeichneten Beständigkeiten ergibt.

Beispiel 4:

Verfährt man analog wie in Beispiel 3 beschrieben, verwendet aber anstelle des Pigments der Formel II das Pigment der Formel III, so erhält man eine feste Pigmentlösung, deren Röntgenbeugungsdiagramm sich vom Röntgenbeugungsdiagramm der physikalischen Mischung der entsprechen den Ausgangsprodukte unterscheidet, und welche beim Einarbeiten in Kunststoffe und Lacke grünstichig gelbe Färbungen hoher Farbstärke mit ausgezeichneten Beständigkeiten ergibt.

Beispiel 5:

Verfährt man analog wie in Beispiel 3 beschrieben, verwendet aber anstelle von 1,0 g 4,1 g des Pigmentes der Formel V und anstelle von 4,4 g des Pigments der Formel II 1,0 g des Pigments der Formel II, so erhält man eine feste Pigmentlösung, deren Röntgenbeugungsdiagramm sich von Röntgenbeugungsdiagramm der physikalischen Mischung der entsprechenden Ausgangsprodukte unterscheidet und welche beim Einarbeiten in Kunststoffe und Lacke grünstichig gelbe Färbungen hohe Farbstärke und Reinheit mit ausgezeichneten Beständigkeiten ergibt.

Beispiel 6:

16 g des Pigments der Formel II, 64 g des Pigments der Formel III, 4,2 g 8-Hydroxymethyl-tricyclo[5,2,1,$0^{2,6}$]decan [®TCD-Alkohol M, HOECHST] und 630 ml Wasser werden in einem Becherglas während

einer Stunde bei Raumtemperatur gut verrührt. In einer ®DYNO-Mühle, Typ KDL (Firma W.A. Backofen, Basel), versehen mit einem 600 ml fassenden Stahlmahlbehälter und enthaltend 480-510 ml Glaskugeln mit einem Durchmesser von ca. 1 mm, wird die erhaltene Pigmentsuspension bei einer Rührgeschwindigkeit von 3000 U/Min. und einer Pumpenförderung von 400 ml/Min. intensiv bei 20-25°C während einer Stunde und 45 Minuten gemahlen. Die Mühle wird danach mit 1 l Wasser im Durchlauf gewaschen und die vereinigten Suspensionen werden filtriert. Der Presskuchen wird mit Wasser gewaschen, im Vakuumtrockenschrank bei 80°C getrocknet und das Trockengut wird gepulvert. Man erhält eine sehr feinkristalline gelbe feste Pigmentlösung, deren Röntgenbeugungsdiagramm sich vom Röntgenbeugungsdiagramm der physikalischen Mischung der entsprechenden Ausgangsprodukte unterscheidet. Beim Einarbeiten in Kunststoffe erhält man sehr transparente gelbe Färbungen mit ausgezeichneten Beständigkeiten.

32 g der gemäss obigem Verfahren erhaltenen sehr feinkristallinen Pigmentlösung werden in 500 ml o-Dichlorbenzol während 18 Stunden bei 140-145°C gerührt. Die gelbe Pigmentsuspension wird abgekühlt, abfiltriert und mit Methanol gewaschen. Das Pressgut wird bei 80°C im Vakuumtrockenschrank getrocknet und die erhaltene Ware wird gepulvert. Man erhält eine grobkristallinere feste Pigmentlösung, deren Röntgenbeugungs diagramm sich vom Röntgenbeugungsdiagramm der physikalischen Mischung der entsprechenden Ausgangskomponenten nach wie vor unterscheidet. Dies bedeutet, dass während der Lösungsmittelbehandlung wohl eine Vergröberung der Partikel, aber keine Auftrennung in die einzelnen Ausgangskomponenten stattfindet. Die elektronenmikroskopische Aufnahme der erhaltenen Kristalle zeigt Partikel mit gleichmässiger prismenförmiger Struktur. Beim Einarbeiten in Kunststoffe und Lacke, erhält man farbstarke, reine, gelbe Ausfärbungen mit ausgezeichneten Beständigkeiten.

Beispiel 7:

In einem 350 ml fassenden Glasbhälter werden 150 ml tert.-Amylalkohol vorgelegt und langsam Stickstoff eingeleitet. 1,1 g Natrium, anschliessend als Emulgator 0,2 g Sulfobernsteinsäure-bis-2-ethylhexylester-Na-Salz werden in tert.-Amylalkohol gegeben und das Gemisch langsam auf 95-102°C erwärmt. Unter heftigem Rühren wird das geschmolzene Metall im Alkohol aufgelöst. Die erhaltene Lösung wird auf ca. 80°C abgekühlt und mit 12,8 g Pigment der Formel II, sowie 3,2 g Pigment der Formel IV versetzt. Das Gemisch wird auf 100°C erwärmt und bei dieser Temperatur während 90 Minuten gerührt. Die so erhaltene Reaktionsmasse wird in einem 1,5 l Glasbehälter unter Rühren auf 300 ml Wasser ausgetragen und der tert.-Amylalkohol danach abdestilliert. Die erhaltene Pigmentsuspension wird abfiltriert, der Presskuchen wird mit Wasser gewaschen, im Vakuumtrockenschrank bei 80°C getrocknet und gepulvert. Man erhält eine rotstichiggelbe feste Pigmentlösung, deren Röntenbeugungsdiagramm sich vom Röntgenbeugungsdiagramm der physikalischen Mischung der entsprechenden Ausgangsprodukte unterscheidet, aber ein ähnliches Diagramm wie die nach Beispiel 2 erhaltene feste Pigmentlösung aufweist. Beim Einarbeiten in Kunststoffen und Lacken erhält man sehr farbstarke, rotstichiggelbe Ausfärbungen mit ausgezeichneten Beständigkeiten.

Beispiel 8:

16 g des Pigments der Formel VI

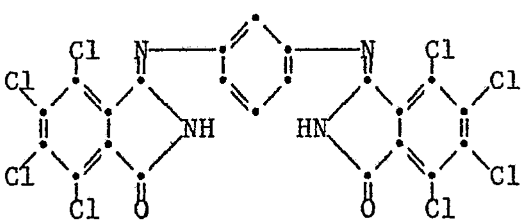

(VI)

64 g des Pigments der Formel III, 4,2 g 8-Hydroxymethyl-tricyclo[5,2,1,$0^{2,6}$]decan (®TCD-Alkohol M, HOECHST) und 630 ml Wasser werden in einem Becherglas während einer Stunde bei Raumtemperatur gut verrührt. In einer ®DYNO-Mühle, Typ KDL (Firma W.A. Bachofen, Basel) wird die Pigmentsuspension wie in Beispiel 6 beschrieben gemahlen. Die so erhaltene Pigmentsuspension wird mit 100 ml n-Butanol versetzt und während 3,5 Stunden bei Rückflusstemperatur gerührt. Die Pigmentsuspension wird abfiltriert, der Presskuchen wird mit Wasser gewaschen, im Vakuumtrockenschrank bei 80°C getrocknet und gepulvert. Man erhält eine gelbe feste Pigmentlösung, deren Röntgenbeugungsdiagramm sich vom Röntgenbeugungsdiagramm der physikalischen Mischung der entsprechenden Ausgangsprodukte unterscheidet. Beim Einarbeiten in Lacken erhält man transparente grünstichiggelbe Färbungen mit ausgezeichneten Beständigkeiten.

Beispiel 9:

40 mg der gemäss Beispiel 1 erhaltenen festen Lösung werden mit 7,3 ml Dioctylphthalat und 13,3 g eines stabilisierten Polyvinylchlorids vom Typ ®LONZA E 722 in einem Becherglas mit einem Glasstab gut vermischt. Das Gemisch wird auf einem Walzenstuhl während 5 Minuten bei 160°C zu einer dünnen Folie verarbeitet. Die so erzeugte PVC-Folie weist eine sehr farbstarke, migrations- und lichtbeständige gelbe Färbung auf.

Beispiel 10:

Eine Mischung von

130 g Steatitkugeln (Ø = 8 mm)

47,5 g eines thermohärtenden Acryllacks, bestehend aus

41,3 g Acrylharz ®VIACRYL VC 373, 60 % (VIANOVA Kunstharz AG),

16,3 g Melaminharz ®MAPRENAL TTX, 55 % (HOECHST AG),

32,8 g Xylol,

4,6 g Ethylglykolacetat,

2,0 g Butylacetat und

1,0 g ®Silikonöl A, 1 % in Xylol (BAYER AG), und

2,5 g der nach Beispiel 4 erhaltenen festen Lösung

wird in einer 200 ml Glasflasche mit "Twist-Off"-Verschluss während 72 Stunden auf dem Rollgestell dispergiert. Nach Abtrennen der Steatitkugeln werden

8,0 g der so dispergierten Volltonmischung,

0,6 g Aluminiumpaste ®ALCOA (60-65 % Al-Gehalt, Aluminium Corp. of America)

1,0 g Methylethylketon und

18,4 g des obigen thermohärtenden Acryllacks

gut vermischt, auf Aluminiumbleche gespritzt und anschliessend während 30 Minuten bei 130°C eingebrannt.

Man erhält sehr farbstarke grünstichig gelbe Metalleffektlackierungen mit ausgezeichneten Beständigkeiten.

Verwendet man anstelle der festen Lösung gemäss Beispiel 4 eine andere feste Lösung gemäss einem der anderen Beispiele, so erhält man ebenso hochwertige Ausfärbungen.

Beispiel 11:

Eine Mischung von 130 g Steatitkugeln von 8 mm Durchmesser, 47,5 g Alkydmelamineinbrennlack, bestehend aus 60 g kurzöligem Alkydharz ®BECKOSOL 27-320 (Reichhold Chemie AG) 60%ig in Xylol, 36 g Melaminharz ®SUPER-BECKAMIN 13-501 (Reichhold Chemie AG) 50%ig in Xylol:Butanol (2:1-Gemisch), 2 g Xylol und 2 g Ethylenglykolmonomethylether, und 2,5 g der nach Beispiel 1 erhaltenen festen Lösung werden in einer 200 ml fassenden Glasflasche mit "Twist-Off"-Verschluss während 120 Stunden auf einem Rollgestell dispergiert. Nach Abtrennen der Steatitkugeln werden 2,4 g der so dispergierten Volltonmischung mit 6,0 g Titandioxid ®KRONOS RN 59 (KRONOS Titan GmbH) und weiteren 24,0 g des obigen Alkydmelamineinbrennlacks vermischt. Das erhaltene Gemisch wird auf Aluminiumbleche gespritzt und anschliessend während 30 Minuten bei 130°C eingebrannt. Man erhält gelbe Ausfärbungen mit ausgezeichneten Beständigkeiten.

Beispiel 12:

Eine Mischung bestehend aus 1,0 g der nach Beispiel 2 erhaltenen festen Pigmentlösung, 1,0 g Antioxydans (®IRGANOX 1010, CIBA-GEIGY AG) und 1000 g Polyethylen-HD Granulat (®VESTOLEN A 60-16, HUELS) wird während 15 Minuten in einer Glasflasche auf einer Rollbank vorgemischt. Danach wird die Mischung in zwei Passagen auf einem Einwellenextruder extrudiert, das so erhaltene Granulat wird auf der Spritzgussmaschine (Allround Aarburg 200) bei 220°C zu Platten verspritzt und 5 Minuten bei 180°C nachgepresst. Die Pressplatten weisen farbstarke rotstichiggelbe Nuancen mit ausgezeichneten Beständigkeiten auf.

Beispiel 13:

1000 g Polypropylengranulat (®DAPLEN PT-55, Chemie LINZ) und 20 g eines 50%igen Pigmentpräparates, bestehend aus 10 g der nach Beispiel 4 erhaltenen festen Pigmentlösung und 10 g Mg-Behenat, werden in einer Mischtrommel intensiv vermischt. Das so behandelte Granulat wird bei 260 bis 285°C nach dem Schmelzspinnverfahren versponnen. Man erhält grünstichiggelbgefärbte Fasern mit sehr guten Licht- und textilen Echtheiten.

**Patentansprüche**

1. Feste Lösungen aus mindestens zwei unterschiedlichen Verbindungen der Formel I

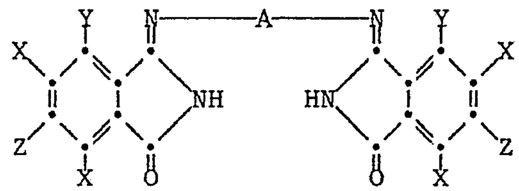 (I),

worin A eine der Gruppen

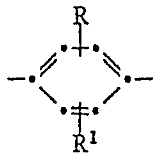 , 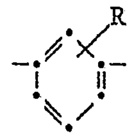 , 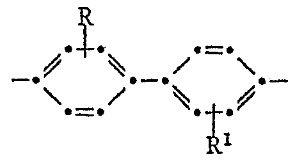 ,

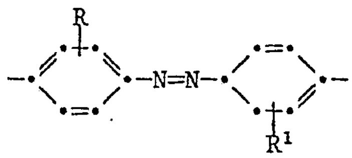 oder 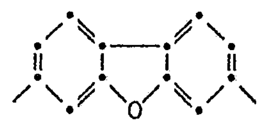

ist, worin R und $R^1$ unabhängig voneinander Wasserstoff, Halogen, $C_1$-$C_4$-Alkyl oder $C_1$-$C_4$-Alkoxy bedeuten, X Halogen, Y und Z unabhängig voneinander Halogen, $C_1$-$C_4$-Alkoxy, $C_1$-$C_4$-Alkylmercapto, $C_5$-$C_6$-Cycloalkoxy, unsubstituiertes oder durch Halogen oder $C_1$-$C_4$-Alkyl substituiertes Phenoxy bedeuten, dadurch gekennzeichnet, dass sich die die festen Lösungen bildenden Verbindungen der Formel I durch mindestens einen der Substituenten X, Y oder Z und/oder durch die Gruppe A unterscheiden und dass sich die Röntgenbeugungsdiagramme der festen Lösungen von der Summe der Röntgenbeugungsdiagramme der Einzelkomponenten unterscheiden.

2. Feste Lösungen gemäss Anspruch 1 aus mindestens zwei unterschiedlichen Verbindungen der Formel I, worin A eine der Gruppen

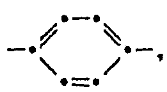 , 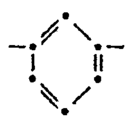 , 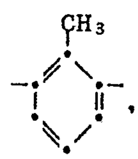 , 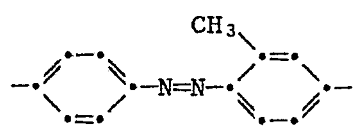 oder

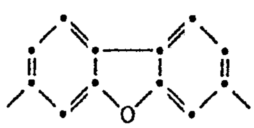

ist.

3. Feste Lösungen gemäss Anspruch 1 aus mindestens zwei unterschiedlichen Verbindungen der Formel I, worin A eine der Gruppen

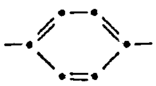 , 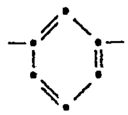 , 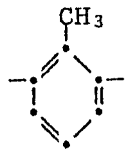 oder

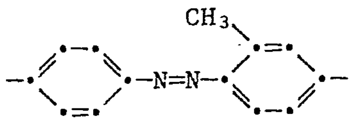

ist.

4. Feste Lösungen gemäss Anspruch 1 aus mindestens zwei unterschiedlichen Verbindungen der Formel I, worin X Chlor, Y und Z unabhängig voneinander Chlor oder $C_1$-$C_4$-Alkoxy bedeuten.

5. Feste Lösungen gemäss Anspruch 1 aus mindestens zwei unterschiedlichen Verbindungen der Formel I, worin X, Y und Z Chlor bedeuten.

6. Verfahren zum Färben von hochmolekularem organischem Material durch Einarbeiten von festen Lösungen gemäss Anspruch 1.

7. Hochmolekulares organisches Material enthaltend feste Lösungen gemäss Anspruch 1.